# EUROPÄISCHE PATENTSCHRIFT

(11) **EP 1 330 345 B1**
(45) Veröffentlichungstag und Bekanntmachung des Hinweises auf die Patenterteilung: **16.02.2005**
(21) Anmeldenummer: 01944859.6
(22) Anmeldetag: 09.07.2001
(51) Int. Cl.: B29B 13/08, B29B 9/00, B29C 47/76, B29C 47/42, B29C 47/68, B29K 67/00

(54) **VERFAHREN ZUR VERARBEITUNG EINES POLYKONDENSATS IN EINEM MEHRWELLEN-EXTRUDER**
METHOD FOR PROCESSING A POLYCONDENSATE IN A MULTI-SHAFT EXTRUDER
PROCEDE DE TRAITEMENT D'UN POLYCONDENSAT DANS UNE EXTRUDEUSE A VIS MULTIPLES

(30) Priorität: 02.11.2000 DE 10054226
(43) Veröffentlichungstag der Anmeldung: 30.07.2003
(73) Patentinhaber: Bühler AG, 9240 Uzwil (CH); Christel, Andreas, 9524 Zuzwil (CH); Schweikle, Jürgen, 9527 Niederhelfenschwil (CH)
(72) Erfinder: INNEREBNER, Federico, 8049 Zürich (CH)
(74) Vertreter: Frommhold, Joachim, Dr.
(86) Internationale Anmeldenummer: PCT/CH2001/000429
(87) Internationale Veröffentlichungsnummer: WO 2002/036317

(56) Entgegenhaltungen:
- EP-A- 0 336 520
- EP-A- 0 560 033
- EP-A- 0 588 008
- EP-A- 0 788 867
- WO-A-00/32377
- WO-A-98/40194
- DE-A- 19 536 289
- DE-C- 19 847 103
- GB-A- 1 375 237
- US-A- 3 619 145
- US-A- 4 255 295
- US-A- 5 242 993
- US-A- 5 334 669

## Beschreibung

Die Erfindung bezieht sich auf ein Verfahren zum Verarbeiten eines Polykondensats, insbesondere Polyethylenterephthalat (PET), zu einem aus Pellets bestehenden Granulat, wobei das Polykondensat im Verlaufe des Verfahrens aufgeschmolzen und später wieder verfestigt wird.

Derartige Verfahren, insbesondere zur Verarbeitung von PET, sind bekannt. Das PET-Ausgangsmaterial stammt dabei direkt aus der PET-Synthese, oder man verwendet PET-Flaschenrecyclat (RPET), wobei man den aus der Flaschenwand stammenden RPET-Anteil bevorzugt, so dass man vorwiegend mit Schnitzeln bzw. Flocken (Flakes) arbeitet. Diese Schnitzel enthalten neben anderen ungewünschten Verunreinigungen stets geringe Mengen an Wasser, wobei es sich einerseits um nicht ausgetriebenes Restwasser vom Flaschenwaschprozess und/oder um neu eingedrungenes Wasser bei der Lagerung und dem Transport der Schnitzel handeln kann. Wenn nun diese Schnitzel aus RPET oder aber neues PET mit ihrem Wassergehalt zur Herstellung von Granulat im Extruder aufgeschmolzen werden, läuft die Kondensationsreaktion vorwiegend in umgekehrter Richtung (Gleichgewichtseinstellung) ab und die Hydrolyse überwiegt, so dass die mittlere Kettenlänge, d.h. der Polymerisationsgrad, abnehmen, wodurch sich die Viskosität (angegeben als Viskositätszahl bzw. intrinsische Viskosität (IV)) des Polymers verringert. Dieser hydrolytische Abbau ist um so ausgeprägter je mehr Wasser und je mehr Zeit für die Abbaureaktion zur Verfügung stehen.

Die US-A-5,334,669 beschreibt ein Verfahren, bei dem ein geschmolzenes Polyesterharz mit einem Dianhydrid einer aromatischen Tetracarbonsäure vermischt wird, woraufhin das Harz granuliert und bei Temperaturen oberhalb der Glasübergangstemperatur TG kristallisiert wird. Die anschliessend erfolgende Aufwertung des kristallisierten Polyesterharzes durch Erhöhung seines Molekulargewichts erfolgt durch Festphasen-Polyaddition bei Temperaturen, die im Bereich von TG bis zu 170°C liegen. Das Mischen des Polyesterharzes mit dem Dianhydrid wird in einem Extruder, wie z.B. einem Zweiwellenextruder, durchgeführt.

Die US-A-5,242,993 verringert die Säurestärke von Polyestern, indem das Proton der COOH-Gruppe durch einen Alkylrest eines Additivs ausgetauscht wird ("endcapping"). Die Verwendung derartiger Additive ermöglicht es, dass die behandelten Polyester ihr Molekulargewicht und ihre Viskosität im wesentlichen behalten, da während des Austausches nur wenig Wasser erzeugt wird, das zu einem Abbau und somit einer Verringerung des Molekulargewichts der Polyester führen würde. Auch hier wird in einem Zweiwellenextruder bei Temperaturen von etwa 280°C bis 300°C gearbeitet. Im Falle von PET betragen die Verweilzeiten im Extruder 85 oder 35 Sek.

Die JP-A-542533 offenbart ein Verfahren, bei dem ein thermoplastisches Polyesterharz mit einem Wassergehalt von mehr als 200 ppm aufgeschmolzen und in einem Extruder geknetet wird. Der Extruder besitzt eine Entgasungseinrichtung, bei der ein Druck von 700 mmHg bis 0 mmHg anliegt. Das Ausmass der Entgasung und somit die Materialeigenschaften des thermoplastischen Polyesters können durch Veränderung des an der Entgasungseinrichtung anliegenden Vakuums eingestellt werden. Es besteht eine starke Korrelation zwischen der Schmelzflussgeschwindigkeit und dem Vakuum-Saugdruck an der Entgasungseinrichtung des Extruders.

Die WO-A-0032377 beschreibt ein Verfahren zur Aufbereitung eines thermoplastischen Polykondensats. Dabei wird das Polykondensat zunächst in einem festen Zustand in einen Extruder eingebracht, anschiessend auf eine Temperatur unterhalb des Schmelzpunktes erwärmt, wobei eine Entgasung bzw. eine Trocknung des Polykondensats erfolgt. Erst danach wird das Polykondensat geschmolzen. Das Entgasung und/oder Trocknen des Polykondensats im festen Zustand erfolgt bei einem Druck unterhalb des atmosphärischen Drucks, wobei ggf. Inertgas zugesetzt wird.

Die EP-A-0 336 520 beschreibt ein Verfahren zum Verarbeiten eines thermoplastischen Polykodensationspolymers, bei das Polymer in fein verteilter Form einem Extruder mit Entgasungsvorrichtung zugeführt wird., bei dem das Polymer von flüchtigen Bestandteilen befreit und geschmolzen wird. Das zu verarbeitende Polymer wird wird unterhalb der Schmelztemperatur des Polymers über eine beachtliche Länge der Schnecke vom Einlass des Extruders transportiert, wobei eine Abführung flüchtiger Bestandteile durch die Entgasungsvorrichtung bei einem Vakuum von weniger als 10 mbar erfolgt. Das Polymer wird auf der verbleibenden Länge der Schnecke nach und nach komprimiert und schliesslich geschmolzen, um den Extruder schliesslich als Endprodukt oder Halbfertigprodukt (z.B. Granulat) zu verlassen.

Bisherige Anstrengungen im Stand der Technik sind auf die Verringerung des Wassergehalts gerichtet. Die übliche Vortrocknung strebt dabei geringe Werte des Wassergehalts bis auf unter 100 ppm herab an (typischerweise etwa 30 ppm), um zu verhindern, dass bei der anschliessenden Aufschmelzung des PETs und/oder RPETs während der üblichen Verweilzeiten im geschmolzenen Zustand, in dem die Reaktionsgeschwindigkeiten des Polykondensationsgleichgewichts nennenswert sind (ab ca. 180-190°C für PET), eine allzu starke Verringerung der IV stattfindet. Akzeptabel sind IV-Verringerungen um etwa 0,05 von ewta 0,80 auf etwa 0,75. Diese umfangreiche Vortrocknung benötigt relativ viel Zeit und Energie und verlangsamt das eingangs beschriebene Verfahren, wenn ein kontinuierlicher Betrieb mit integrierter Vortrocknung angestrebt wird.

Der Erfindung liegt daher die Aufgabe zugrunde, das Verfahren des Stands der Technik derart zu gestalten, dass bei nur teilweiser Vortrocknung keine grössere IV-Verringerung als beim Stand der Technik eintritt.

Diese Aufgabe wird durch das Verfahren nach Anspruch 1 gelöst. Die Erfindung sorgt nun dafür, dass die Zeit, während der das zu verarbeitende Polykondensat in der Schmelze vorliegt und auf Schmelztemperatur oder darüber ist, auf weniger als 60 Sekunden begrenzt wird. Ausserdem wird dafür gesorgt, dass die Gesamtzeit, während der das Polykondensat im Verlaufe des Verfahrens als Schmelze vorliegt, einen ersten Zeitabschnitt, während dem das Polykondensat nach dem Aufschmelzen im Extruder noch im Extruder verweilt, und einem zweiten Zeitabschnitt, während dem das noch geschmolzene Polykondensat ausserhalb des Extruders bearbeitet wird, aufweist, wobei die Dauer des ersten Zeitabschnitts erfindungsgemäss weniger als 10 Sek. beträgt. Dadurch hat das Polykondensat nicht mehr genug Zeit, um aufgrund seines relativ hohen Wasseranteils vorwiegend hydrolytisch zu reagieren. Somit kann auf die zeitraubende und energieintensive Vortrocknung zumindest teilweise verzichtet werden, und trotz des relativ hohen Wasseranteils im Ausgangs-Polykondensat tritt bei der Verarbeitung im Schmelzzustand deutlich weniger Hydrolyse auf. So kann z.B. bei PET bzw. RPET der IV-Abau auch bei einem relativ hohen Wasseranteil von etwa 600 ppm auf einem kleinen akzeptablen Wert gehalten werden. Da sich die Gesamtzeit, während der das Polykondensat im Verlaufe des Verfahrens als Schmelze vorliegt, aus einem ersten Zeitabschnitt, während dem das Polykondensat nach dem Aufschmelzen im Extruder noch im Extruder verweilt, und aus einem zweiten Zeitabschnitt, während dem das noch geschmolzene Polykondensat ausserhalb des Extruders bearbeitet wird, zusammensetzt, wobei der erste Zeitabschnitt vorzugsweise weniger als etwa 15 Sekunden beträgt, kann eine Bearbeitung des geschmolzenen Polykondensats ausserhalb des Extruders einen Schritt zur Schmelzefiltration zur Abscheidung von Verunreinigungspartikeln enthalten. Zum Aufbau des notwendigen Druckes wird vorzugsweise eine Schmelzepumpe eingesetzt. Dazu müssen die Schmelzepumpe und der Schmelzefilter so in den Prozess integriert werden, dass die erfindungsgemässe kurze Verweilzeit eingehalten wird.

Das Polykondensat kann in seiner Ausgangsform als Schüttmaterial mit einer Schüttdichte im Bereich von 200 kg/m³ bis 600 kg/m³, insbesondere in Form von Flocken oder Schnitzeln vorliegen, wobei es sich typischerweise um Flaschen-Recyclat (RPET) handelt.

Vorzugsweise wird das Polykondensat-Ausgangsmaterial vor dem Aufschmelzen teilweise vorgetrocknet. Dadurch kann durch Kombination einer wenig aufwendigen teilweisen Trocknung und der kurzen Verweilzeit im geschmolzenen Zustand ein Endprodukt mit geringem IV-Abbau erhalten werden.

Bei einer speziellen Ausführung weist das Verfahren einen Entgasungsschritt zum Entfernen flüchtiger Verunreinigungen und/oder Zerfallsprodukte aus dem Polykondensat auf.

Für die Aufschmelzung des Polykondensats wird vorzugsweise ein Zweiwellen- oder Mehrwellen-Extruder, insbesondere ein RingExtruder, verwendet. Beim RingExtruder ist das Verhältnis zwischen den Oberflächen, an denen auf das zu verarbeitende Produkt aktiv eingewirkt wird, und dem Volumen des zu verarbeitenden Produkts besonders gross, so dass bei vorgegebener Baulänge eine höhere Entgasungsleistung und engeres Verweilzeitspektrum und schliesslich eine insgesamt kürzere Verweilzeit als bei herkömmlichen Doppelschnecken-Extrudern erreicht wird.

Vorzugsweise wird das Polykondensat in den Extruder im festen Zustand eingebracht, und das Polykondensat wird auf eine Temperatur unterhalb des Schmelzpunktes erwärmt, wobei das Polykondensat entgast und/oder getrocknet wird. Das Entgasen und/oder Trocknen des Polykondensats im festen Zustand erfolgt hier bei einem Druck unterhalb des atmosphärischen Drucks und/oder unter Zugabe eines Inertgases.

Weitere Vorteile, Merkmale und Anwendungsmöglichkeiten der Erfindung ergeben sich aus der nun folgenden Beschreibung bevorzugter Beispiele und anhand der Figur, die jedoch nicht einschränkend aufzufassen sind.

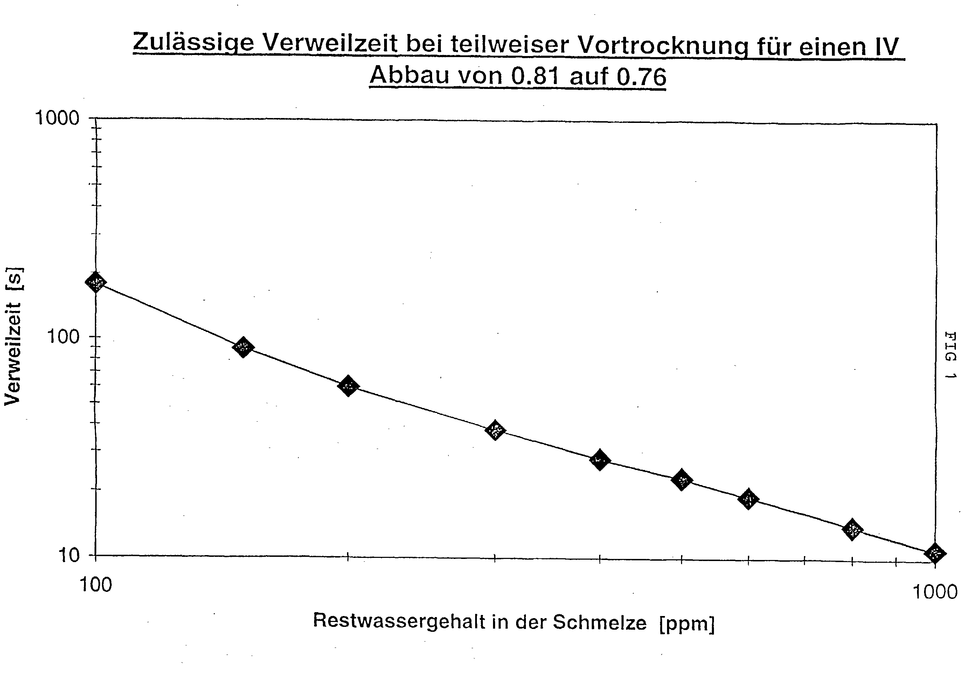

Die Figur 1 zeigt die für einen IV-Abbau von 0,81 auf 0,76 zulässige Verweilzeit von PET im geschmolzenen Zustand als Funktion des Restwassergehalts der PET-Schmelze.

Bei allen Beispielen wurden Flakes (Flocken, Schnitzel) mit einem Eingangs IV-Wert von 0.81 und 0.6% Wassergehalt in einem 30mm-RingExtruder bei 300 rpm einer teilweisen Vortrocknung unterzogen und aufgeschmolzen. Die Schmelze wurde entgast und durch eine Schmelzepumpe, einen Schmelzefilter und eine Strangdüse geführt und danach sofort abgekühlt. Die Schmelzetemperatur lag jeweils bei 285°C.

### Beispiel 1:

Das Verfahren wurde derart betrieben, dass sich eine Gesamt-Verweilzeit in der Schmelze von 19 Sekunden ergab. Diese Gesamt-Verweilzeit setzt sich zusammen aus der Verweilzeit der Schmelze innerhalb des Extruders und der Verweilzeit der Schmelze ausserhalb des Extruders. Der IV-Wert des Granulates lag bei 0,76.

### Beispiel 2:

Das Verfahren wurde derart betrieben, dass sich eine Gesamt-Verweilzeit in der Schmelze von 43 Sekunden ergab, was durch ein beheiztes Rohr zwischen Schmelzefilter und Düse erreicht wurde. Diese Gesamt-Verweilzeit setzt sich zusammen aus der Verweilzeit der Schmelze innerhalb des Extruders und der Verweilzeit der Schmelze ausserhalb des Extruders. Der IV-Wert des Granulates lag bei 0,69.

Aus der berechneten Reaktionskinetik lässt sich der Restwassergehalt nach der Schmelzeentgasung berechnen, der für beide Versuche bei ca. 600 ppm liegt. Daraus ergibt sich auch der maximale hydrolytisch Abbau bei (unendlich) langer Verweilzeit, der einem IV-Abbau auf 0.52 entspricht.

Aus den oben gezeigten Versuchen wird ersichtlich, dass sich der hydrolytische Abbau von PET trotz einer hohen Restwassermenge in der Schmelze durch eine kurze Verweilzeit stark verringern lässt. Man erkennt, dass man auch mit nur teilweiser Vortrocknung bei entsprechend kurzer Verweilzeit des PETs im Schmelzzustand einen akzeptablen IV-Abau von 0,05 erreicht.

In dem Diagramm der Figur 1 sind die zulässigen Verweilzeiten bei 285°C Schmelzetemperatur bei teilweiser Vortrocknung angegeben, die den IV-Abbau auf den für viele Anwendungen akzeptablen Wert von 0.05 beschränken. Wie eingangs erwähnt, muss im Gegensatz dazu beim Stand der Technik eine Vortrocknung auf unter 100 ppm angestrebt werden.

## Patentansprüche

1. Verfahren zum Verarbeiten eines Polykondensats zu einem aus Pellets bestehenden Granulat, wobei das Polykondensat im Verlaufe des Verfahrens aufgeschmolzen und später wieder verfestigt wird und die Gesamtzeit, während der die Temperatur des Polykondensats im Verlaufe des Verfahrens über der Schmelztemperatur des Polykondensats liegt, weniger als etwa 60 Sekunden beträgt, die Gesamtzeit, während der das Polykondensat im Verlaufe des Verfahrens als Schmelze vorliegt, einen ersten Zeitabschnitt, während dem das Polykondensat nach dem Aufschmelzen im Extruder noch im Extruder verweilt, und einen zweiten Zeitabschnitt, während dem das noch geschmolzene Polykondensat ausserhalb des Extruders bearbeitet wird, aufweist, **dadurch gekennzeichnet, dass** die Dauer des ersten Zeitabschnitts weniger als 10 Sekunden beträgt.

2. Verfahren nach Anspruch 1, **dadurch gekennzeichnet, dass** die Gesamtzeit, während der die Temperatur des Polykondensats im Verlaufe des Verfahrens über der Schmelztemperatur des Polykondensats liegt, weniger als 30 Sekunden beträgt.

3. Verfahren nach Anspruch 1 oder 2, **dadurch gekennzeichnet, dass** der Restwassergehalt in der Schmelze grösser als 200 ppm ist.

4. Verfahren nach einem der Ansprüche 1 bis 3, **dadurch gekennzeichnet, dass** das Polykondensat ein Polyester ist.

5. Verfahren nach einem der vorhergehenden Ansprüche, **dadurch gekennzeichnet, dass** das Polykondensat in seiner Ausgangsform als Schüttmaterial mit einer Schüttdichte im Bereich von 200 kg/m³ bis 600 kg/m³ vorliegt.

6. Verfahren nach einem der vorhergehenden Ansprüche, **dadurch gekennzeichnet, dass** das Polykondensat in Form von Flocken oder Schnitzeln vorliegt.

7. Verfahren nach einem der Ansprüche 4 bis 6, **dadurch gekennzeichnet, dass** es sich bei dem Polyethylenterephthalat um Flaschen-Recyclat handelt.

8. Verfahren nach einem der vorhergehenden Ansprüche, **dadurch gekennzeichnet, dass** das Polykondensat-Ausgangsmaterial vor dem Aufschmelzen teilweise vorgetrocknet wird.

9. Verfahren nach einem der vorhergehenden Ansprüche, **dadurch gekennzeichnet, dass** es einen Entgasungsschritt zum Entfernen flüchtiger Verunreinigungen und/oder Zerfallsprodukte aus der Polykondensatschmelze aufweist.

10. Verfahren nach einem der vorhergehenden Ansprüche, **dadurch gekennzeichnet, dass** für die Aufschmelzung des Polykondensats ein Zweiwellen- oder Mehrwellen-Extruder, insbesondere ein Ring-Extruder, verwendet wird.

11. Verfahren nach Anspruch 10, bei dem das Polykondensat in den Extruder im festen Zustand eingebracht wird, das Polykondensat auf eine Temperatur unterhalb des Schmelzpunktes erwärmt wird und das Polykondensat entgast und/oder getrocknet wird, **dadurch gekennzeichnet, dass** das Entgasen und/oder Trocknen des Polykondensats im festen Zustand bei einem Druck unterhalb des atmosphärischen Drucks und/oder unter Zugabe eines Inertgases erfolgt.

12. Verfahren nach einem der vorhergehenden Ansprüche, **dadurch gekennzeichnet, dass** die Bearbeitung des geschmolzenen Polykondensates ausserhalb des Extruders eine Schmelzefiltration beinhaltet.

13. Verfahren nach einem der vorhergehenden Ansprüche, **dadurch gekennzeichnet, dass** die Bearbeitung des geschmolzenen Polykondensates ausserhalb des Extruders die Verwendung einer Schmelzepumpe beinhaltet.

## Claims

1. Method for the processing of a polycondensate to form a granulate consisting of pellets, whereby the polycondensate is melted in the course of the process and later resolidifies, and the total time, during which the temperature of the polycondensate in the course of the process lies above the melting temperature of the polycondensate, amounts to less than some 60 seconds, the total time during which the polycondensate is present in the course of the process as a melt exhibits a first time period during which the polycondensate remains in the extruder after melting in the extruder, and a second time period, during which the still molten polycondensate is processed outside the extruder, **characterised in that** the duration of the first period of time is less than 10 seconds.

2. Method according to Claim 1, **characterised in that** the total time during which the temperature of the polycondensate in the course of the process lies above the melting temperature of the polycondensate is less than 30 seconds.

3. Method according to Claim 1 or 2, **characterised in that** the residual water content in the melt is greater than 200 ppm.

4. Method according to one of Claims 1 to 3, **characterised in that** the polycondensate is a polyester.

5. Method according to one of the foregoing Claims, **characterised in that** the polycondensate in its initial form is present as a bulk material with an apparent density in the range from 200 kg/m3 to 600 kg/m3.

6. Method according to one of the foregoing Claims, **characterised in that** the polycondensate is present in the form of flakes.

7. Method according to one of Claims 4 to 6, **characterised in that** the polyethylene terephthalate is bottle recyclate.

8. Method according to one of the foregoing Claims, **characterised in that** the polycondensate source material is partially pre-dried before melting.

9. Method according to one of the foregoing Claims, **characterised in that** it exhibits a degasification step for the removal of volatile impurities and/or products of decomposition from the polycondensate melts.

10. Method according to one of the foregoing Claims, **characterised in that** a two-shaft or multi-shaft extruder is used for the melting of the polycondensate, and in particular a ring extruder.

11. Method according to Claim 10, in which the polycondensate is introduced into the extruder in the solid state, the polycondensate is heated to a temperature below the melting point, and the polycondensate is degassed and/or dried, and that the degassing and/or drying of the polycondensate in the solid state takes place at a pressure below atmospheric pressure and/or with the addition of an inert gas.

12. Method according to one of the foregoing Claims, **characterised in that** the processing of the molten polycondensate outside the extruder includes melt filtration.

13. Method according to one of the foregoing Claims, **characterised in that** the processing of the molten polycondensate outside the extruder includes the use of a melt pump.

## Revendications

1. Procédé de transformation d'un polycondensé en granulé composé de boulettes, le polycondensé étant fondu au cours du procédé et resolidifié plus tard et le temps total pendant lequel la température du polycondensé se trouve au cours du procédé au dessus de la température de fusion du polycondensé s'élevant à moins d'environ 60 secondes, le temps total pendant lequel le polycondensé se trouve sous forme de coulée au cours du procédé étant constitué d'un premier laps de temps pendant lequel le polycondensé séjourne encore dans l'extrudeuse après la fusion dans l'extrudeuse et d'un deuxième laps de temps pendant lequel le polycondensé encore fondu est transformé hors de l'extrudeuse, **caractérisé en ce que** la durée du premier laps de temps s'élève à moins de 10 secondes.

2. Procédé selon la revendication 1, **caractérisé en ce que** le temps total pendant lequel la température du polycondensé se trouve au cours du procédé au dessus de la température de fusion du polycondensé est de moins de 30 secondes.

3. Procédé selon la revendication 1 ou 2, **caractérisé en ce que** la quantité d'eau résiduelle contenue dans la coulée est supérieure à 200 ppm.

4. Procédé selon l'une quelconque des revendications 1 à 3, **caractérisé en ce que** le polycondensé est un polyester.

5. Procédé selon l'une quelconque des revendications précédentes, **caractérisé en ce que** le polycondensé est présent sous sa forme initiale sous forme de matériau en vrac avec une densité en vrac de l'ordre de 200 kg/mm³ à 600 kg/mm³.

6. Procédé selon l'une quelconque des revendications précédentes, **caractérisé en ce que** le polycondensé est, présent sous forme de flocons ou de copeaux.

7. Procédé selon l'une quelconque des revendications 4 à 6, **caractérisé en ce qu'**il s'agit, en ce qui concerne le téréphtalate de polyéthylène, de produit recyclé de bouteilles.

8. Procédé selon l'une quelconque des revendications précédentes, **caractérisé en ce que** le matériau polycondensé initial est préséché partiellement avant la fusion.

9. Procédé selon l'une quelconque des revendications précédentes, **caractérisé en ce qu'**il présente une étape de dégazage pour éliminer les impuretés volatiles et/ou les produits de décomposition de la coulée de polycondensé.

10. Procédé selon l'une quelconque des revendications précédentes, **caractérisé en ce qu'**on utilise pour la fusion du polycondensé une extrudeuse à deux arbres ou plusieurs arbres, notamment une extrudeuse annulaire.

11. Procédé selon la revendication 10, dans lequel le polycondensé est intégré à l'état solide dans l'extrudeuse, le polycondensé est chauffé à une température inférieure au point de fusion et le polycondensé est dégazé et/ou séché, **caractérisé en ce que** le dégazage et/ou le séchage du polycondensé a lieu à l'état solide à une pression inférieure à la pression atmosphérique et/ou en ajoutant un gaz inerte.

12. Procédé selon l'une quelconque des revendications précédentes, **caractérisé en ce que** le traitement du polycondensé fondu hors de l'extrudeuse comprend une filtration de couléè.

13. Procédé selon l'une quelconque des revendications précédentes, **caractérisé en ce que** le traitement du polycondensé fondu hors de l'extrudeuse comprend l'utilisation d'une pompe à coulée.
